# EUROPÄISCHE PATENTSCHRIFT

(11) **EP 4 377 102 B1**
(45) Veröffentlichungstag und Bekanntmachung des Hinweises auf die Patenterteilung: **25.06.2025**
(21) Anmeldenummer: 22764306.1
(22) Anmeldetag: 14.07.2022
(51) Int. Cl.: B60C 13/00

(54) **FAHRZEUGREIFEN**
VEHICLE TYRE
PNEUMATIQUE DE VÉHICULE

(30) Priorität: 27.07.2021 DE 102021208109
(43) Veröffentlichungstag der Anmeldung: 05.06.2024
(73) Patentinhaber: Continental Reifen Deutschland GmbH, 30175 Hannover (DE)
(72) Erfinder: BOGENSCHÜTZ, Peter, 30165 Hannover (DE); BEHR, Ulrich, 30165 Hannover (DE)
(74) Vertreter: Continental Corporation
(86) Internationale Anmeldenummer: PCT/DE2022/200157
(87) Internationale Veröffentlichungsnummer: WO 2023/006161

(56) Entgegenhaltungen:
- DE-T5- 112018 005 915
- JP-B2- 3 566 388
- JP-B2- 5 682 777
- US-B1- 6 253 815
- US-B2- 9 975 203

## Beschreibung

Die Erfindung betrifft einen Fahrzeugreifen mit zwei Seitenwänden, wobei auf zumindest einer Seitenwand zumindest ein Zeichen, beispielsweise ein Schriftzeichen, eine Ziffer oder ein bildlich gestaltetes Element, aus einer Schraffur aus einer Vielzahl von parallel zueinander verlaufenden Rippen ausgebildet ist, welche unter gegenseitigen Abständen von höchstens 0,60 mm zueinander verlaufen, wobei das/die Zeichen in einen Seitenwandabschnitt mit einem Hintergrunddesign eingebettet ist/sind, welches aus einer glatten Basisfläche und unter gegenseitigen Abständen sowie kreuzungsfrei verlaufenden Erhebungen und/oder Vertiefungen besteht, die ein schraffurartig gestaltetes Muster bilden.

Ein Fahrzeugreifen mit einem derart gestalteten Seitenwanddesign ist beispielsweise aus der US 5 303 758 A bekannt. Das Seitenwanddesign umläuft kreisringförmig die Seitenwand und weist ein erstes, ein Hintergrunddesign bildendes Muster aus einer Vielzahl von in radialer Richtung geradlinig verlaufenden, zueinander gleich beabstandeten Erhebungen auf, welche im Querschnitt dreieckförmig gestaltet sind und an ihrer Basis zueinander einen Abstand in der Größenordnung von 0,30 mm aufweisen. An zumindest einer Stelle des ersten Musters ist ein zweites Muster eingebettet, welches beispielweise aus den Schriftzeichen eines Schriftzuges besteht. Auch das zweite Muster besteht aus einer Vielzahl von geradlinig verlaufenden Erhebungen, deren gegenseitiger Abstand im Wesentlichen jenem der Erhebungen des ersten Musters entspricht, wobei die Erhebungen des zweiten Musters zueinander parallel verlaufen und insbesondere einen trapezförmigen Querschnitt aufweisen. Die Erhebungen des zweiten Musters verlaufen unter einem Winkel von 45° bis 90° relativ zu den Erhebungen des ersten Musters. Das zweite Muster hebt sich gegenüber dem ersten nur geringfügig ab.

Ein weiterer Fahrzeugreifen der eingangs genannten Art ist aus der
DE 11 2018 005 915 T5 bekannt. Dieser Fahrzeugreifen weist Seitenwände auf, wobei auf zumindest einer Seitenwand in einem Seitenwandabschnitt Zeichen in Form von Buchstaben, Zahlen, Symbolen oder Figuren aus einer am Außenrand des Zeichens umlaufenden Einfassungsrippe und einer innerhalb von dieser ausgebildeten Schraffur aus einer Vielzahl von parallel zueinander und unter gegenseitigen Abständen von 0,60 mm verlaufenden, weiteren Rippen ausgebildet sind. Das bzw. die Zeichen ist bzw. sind in ein Hintergrunddesign eingebettet, welches aus einer glatten Basisfläche und unter gegenseitigen Abständen sowie kreuzungsfrei verlaufenden Erhebungen besteht. Eine derart gestaltete Seitenwand soll eine gute Sichtbarkeit der Zeichen ermöglichen, wobei die Seitenwand beim Abrollen ungehindert vom Luftstrom passierbar und derart der Kraftstoffverbrauch gering sein soll.

Aus der JP 3 566 388 B2 ist ein Fahrzeugreifen mit Seitenwänden bekannt, wobei auf zumindest einer Seitenwand Zeichen in Form von Buchstaben aus einer am Außenrand des Zeichens umlaufenden Einfassungsrippe und einer innerhalb von dieser ausgebildeten Schraffur aus einer Vielzahl von parallel zueinander sowie unter ersten Abständen verlaufenden Rippen vorhanden sind. Die Zeichen sind in ein Hintergrunddesign eingebettet, welches aus einer glatten Basisfläche und parallel sowie unter zweiten Abständen zueinander verlaufenden Erhebungen besteht. Die ersten Abstände, unter welchen die Rippen der Schraffur verlaufen, weichen von den zweiten Abständen, unter welchen die Erhebungen des Hintergrunddesgins verlaufen, ab.

Die JP 5 682 777 B2 offenbart einen Fahrzeugreifen mit Seitenwänden, wobei auf zumindest einer Seitenwand Buchstaben aus einer Schraffur aus einer Vielzahl von gerade, parallel zueinander sowie im Wesentlichen in Umfangsrichtung verlaufenden Rippen ausgebildet ist. Die Buchstanden sind in ein Hintergrunddesign eingebettet, welches aus parallel zueinander sowie zur Umfangsrichtung unter einem Winkel verlaufenden Erhebungen besteht. Auch bei einer großflächigen Ausführung der Buchstaben und des Hintergrunddesigns soll die Seitenwand beim Abrollen des Reifens weitgehend ungehindert vom Luftstrom passierbar sein.

Die US 6 253 815 B1 offenbart einen Fahrzeugreifen mit Seitenwänden, wobei auf zumindest einer Seitenwand Buchstaben aus einer Schraffur aus einer Vielzahl von gerade und parallel zueinander verlaufenden Rippen ausgebildet ist. Die Rippen sind jeweils durch zumindest zwei Flanken, die unter verschiedenen Winkel geneigt verlaufen, begrenzt. Die Buchstaben den sind in ein Hintergrunddesign eingebettet, welches Erhebungen umfasst, die ebenfalls durch zumindest zwei Flanken, welche unter verschiedenen Winkel geneigt verlaufen, begrenzt sind, wodurch die Buchstaben gut erkennbar sein sollen.

Aus der US 9 975 203 B2 ist ein Fahrzeugreifen mit Seitenwänden bekannt. Auf einer Seitenwand ist ein Seitenwandmuster mit fünf kleinen Erhebungen pro Quadratmillimeter ausgebildet. Ferner sind zumindest zwei parallel zueinander verlaufende Rippen mit einem dreieckigen Querschnitt vorgesehen, welche das Seitenwandmuster kreuzen.

Aus der EP 1 859 963 B1 ist ein Fahrzeugreifen mit einer Seitenwand bekannt, welche ein zumindest über einen Kreisringabschnitt ausgebildetes Zierband aufweist, das Anzeigesektoren aufweist. Ein Anzeigesektor ist beispielsweise ein Schriftzug aus Schriftzeichen aus einer Vielzahl von parallel zueinander verlaufenden und eng beabstandeten Erhebungen und befindet sich innerhalb eines Seitenwandabschnittes, welcher eine glatte Oberfläche aufweist. Bei einer alternativen Ausführung ist der Seitenwandabschnitt mit einer Schraffur aus eng beabstandeten Erhebungen versehen, der Schriftzug weist Schriftzeichen mit einer glatten Oberfläche auf.

Als besonders gut erkennbar bzw. lesbar auf Seitenwänden haben sich Zeichen - Schriftzüge, Ziffern, bildliche Ausgestaltungen - erwiesen, welche als Schraffuren, also aus einer Vielzahl von gering beabstandeten, vorzugsweise parallel zueinander verlaufenden Erhebungen oder Vertiefungen, ausgebildet sind und von glatten Flächen umgeben sind. Besonders gut sichtbar und besonders dunkel erscheinen aus Schraffuren gebildete Zeichen, welche gegenüber der umgebenden, den Hintergrund bildenden glatten Außenfläche vertieft sind. Der mit glatter Außenfläche versehene Hintergrund bedeckt meist relativ große Abschnitte der Seitenwand. Eine optisch einwandfreie Ausgestaltung dieser glatten Außenflächen erweist sich oft als schwierig, insbesondere wegen dem kaum vermeidbaren Ausbilden von Abdrücken von in der Vulkanisationsform vorhandenen Entlüftungsbohrungen oder Entlüftungseinsätzen, dem Ausbilden sonstiger Fehlstellen und von sogenannten Seitenwand-Einschnürungen (Sidewall Indentations), welche konstruktionsbedingte Unebenheiten an Reifenseitenwänden in Folge von Karkasslagenüberlappungen im Reifen sind.

Der Erfindung liegt somit die Aufgabe zugrunde, auf Seitenwänden von Fahrzeugreifen eine Designausgestaltung zur Verfügung zu stellen, mit welcher der erwünschte hohe Kontrast zwischen dem bzw. den Zeichen einerseits - Schriftzeichen, Schriftzügen aus Schriftzeichen, Ziffern oder bildlichen Gestaltungen - und dem Hintergrund andererseits beibehalten wird und ein optimales Kaschieren von konstruktionsbedingten Unebenheiten und von sonstigen Fehlstellen auf der Seitenwand sichergestellt ist.

Gelöst wird die gestellte Aufgabe erfindungsgemäß dadurch, dass im Hintergrunddesign die Basisfläche das Zwei- bis Zehnfache der von den Erhebungen und/oder Vertiefungen bedeckten Fläche einnimmt, wobei mindestens 50 % der Erhebungen und/oder Vertiefungen unter gegenseitigen Abständen zueinander verlaufen, die das Zwei- bis Fünffache des gegenseitigen Abstandes der Rippen betragen.

Bei erfindungsgemäß gestalteten Seitenwänden ist daher anstelle eines glatten Hintergrundes oder eines Hintergrundes mit einer üblichen Schraffur aus eng beabstandeten Erhebungen ein Hintergrunddesign aus locker oder weitgehend locker angeordneten und doch schraffurartig verlaufenden Erhebungen und/oder Vertiefungen vorgesehen. Dieses Hintergrunddesign lenkt das Auge des Betrachters von etwaigen Unebenheiten, Fehlstellen und Seitenwand-Einschnürungen ab, ohne die vorherrschende Sichtbarkeit und den vorhandenen Kontrast zum eingebetteten Zeichen bzw. zu den eingebetteten Zeichen zu beeinträchtigen.

Bei einer bevorzugten Ausführung nimmt die Basisfläche im Hintergrunddesign bis zum Fünffachen der von den Erhebungen und/oder Vertiefungen bedeckten Fläche ein. Dadurch sind im Hintergrunddesign auffallendere schraffurartig gestaltete Muster ausbildbar.

Bei einer weiteren bevorzugten Ausführung verlaufen im Hintergrunddesign sämtliche Erhebungen und/oder Vertiefungen unter gegenseitigen Abständen, die das Zwei- bis Fünffache des gegenseitigen Abstandes der Rippen beträgt. Dabei kann gleichzeitig vorgesehen sein, dass im Hintergrunddesign sämtliche Erhebungen und/oder Vertiefungen unter gleich großen oder weitgehend gleich großen gegenseitigen Abständen verlaufen. Das Hintergrunddesign kann daher mit "klassischen" Schraffuren oder mit schraffurartig gestalteten Mustern versehen sein und somit an die Ausgestaltung des/der Zeichen(s) gut angepasst werden.

Der Kontrast zwischen dem bzw. den Zeichen und dem Hintergrunddesign lässt sich insbesondere auch den Verlauf der Erhebungen und/oder Vertiefungen im Hintergrunddesign beeinflussen. Besonders vorteilhaft ist es diesbezüglich, wenn sich die Erhebungen und/oder Vertiefungen im Hintergrunddesign in radialer Richtung oder unter einem Winkel von bis zu 45° zur radialen Richtung erstrecken.

Die Erhebungen und/oder Vertiefungen im Hintergrunddesign können geradlinig, insgesamt bogenförmig, wellenförmig oder zickzackförmig verlaufen. Je nach gewähltem Verlauf lassen sich etwaige Unebenheiten, Fehlstellen oder die erwähnten Seitenwandeinschnürungen besonders vorteilhaft überdecken.

Ein besonders vorteilhaftes und auffallendes Hintergrunddesign lässt sich mit einer Ausführung erzielen, bei welcher die Erhebungen und/oder Vertiefungen im Hintergrunddesign zum Teil zick-zack- oder wellenförmig und zum Teil geradlinig oder weitgehend geradlinig verlaufen, wobei bei einander benachbarten Erhebungen und/oder Vertiefungen durch eine fortschreitende Abnahme der Winkelung der Abschnitte des Zick-Zack-Verlaufs oder der Wellenform ein Übergang zu mehr geradlinig oder zu geradlinig verlaufenden Erhebungen und/oder Vertiefungen erfolgt, wobei anschließend wieder zick-zack- oder wellenförmig verlaufende Erhebungen und/oder Vertiefungen mit zunehmender Winkelung der Abschnitte des Zick-Zack-Verlaufs oder der Wellenform folgen.

Auf dem mit dem Hintergrund versehenen Seitenwandabschnitt können weitere, von Zeichen freie Seitenwandabschnitte mit Mustern aus zickzack- oder wellenförmig verlaufenden Erhebungen/Vertiefungen folgen, in welchen durch eine Variation der Winkelung von Abschnitten von zickzack- oder wellenförmig verlaufenden Erhebungen und/oder Vertiefungen und/oder durch eine Variation des gegenseitigen Abstandes der Erhebungen und/oder Vertiefungen ein Muster aus dunkler und heller erscheinenden Musterelementen gebildet ist. In diesen Seitenwandabschnitten können die Erhebungen und/oder Vertiefungen auch sehr eng zueinander beabstandet, insbesondere zumindest teilweise unter einem Abstand ≤ 0,60 mm, verlaufen.

Die Erhebungen sind im Querschnitt vorzugsweise dreieckförmig gestaltet, weisen gegenüber der Basisfläche eine größte Höhe von 0,15 mm bis 0,50 mm, insbesondere von bis zu 0,30 mm und an ihrer Basis eine Breite von 0,30 mm bis 0,60 mm auf. Die Vertiefungen sind im Querschnitt bevorzugt V-förmig gestaltet und weisen eine größte Tiefe von 0,15 mm bis 0,50 mm, insbesondere von bis zu 0,30 mm und am Niveau der Basisfläche eine Breite von 0,30 mm bis 0,60 mm auf. Ein schraffurartig gestaltetes Muster aus derartigen Erhebungen und/oder Vertiefungen ist gut sichtbar, ohne den Kontrast zu dem bzw. den eingebetteten Zeichen zu beeinträchtigen.

Besonders dunkel und kontrastreich gegenüber dem Hintergrunddesign sind im Hintergrunddesign eingebettete Zeichen, welche jeweils eine 0,20 bis 1,00 mm tiefe Vertiefung in der Basisfläche sind, auf deren Boden die Rippen ausgebildet sind. Bevorzugt verlaufen die Rippen geradlinig oder insgesamt bogenförmig und weisen eine Höhe auf, die geringer ist, um insbesondere 0,10 mm bis 0,20 mm geringer ist, als die Tiefe der Vertiefung. An ihrer Basis besitzen die Rippen eine Breite von 0,30 mm bis 0,60 mm. Auch die Rippen sind im Querschnitt bevorzugt dreieckförmig gestaltet. Bevorzugt erstrecken sich die Rippen unter einem Winkel von 30° bis 50° relativ zur Umfangsrichtung der Seitenwand.

Weitere Merkmale, Vorteile und Einzelheiten der Erfindung werden nun anhand der Zeichnung, die Ausführungsbeispiele darstellt, näher beschrieben. Dabei zeigen
Fig. 1 einen Umfangsabschnitt einer Seitenwand eines Fahrzeugreifens in Draufsicht mit einer Ausführungsform der Erfindung,
Fig. 2 das Detail D aus Fig. 1 in stark vergrößerter Darstellung,
Fig. 3 einen Schnitt entlang der Linie III-III der Fig. 2 in nochmals vergrößerter Darstellung,
Fig. 4 einen Schnitt entlang der Linie IV-IV der Fig. 1 in stark vergrößerter Darstellung,
Fig. 5 eine alternative Ausführung anhand eines zu Fig. 4 analogen Schnittes,
Fig. 6 einen Umfangsabschnitt einer Seitenwand eines Fahrzeugreifens in Draufsicht mit einer weiteren Ausführungsform der Erfindung.

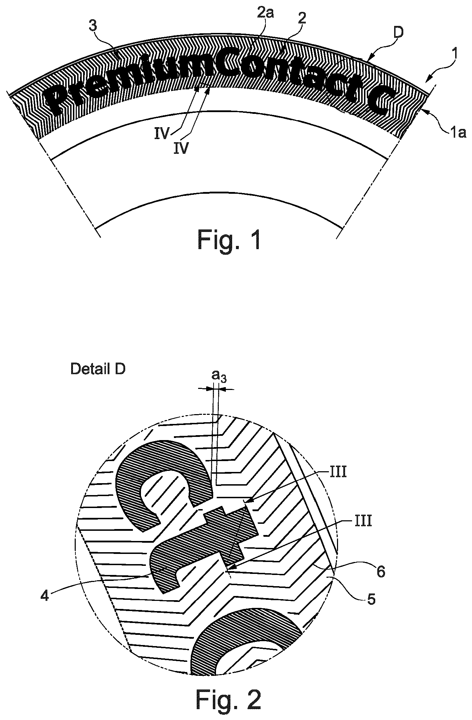

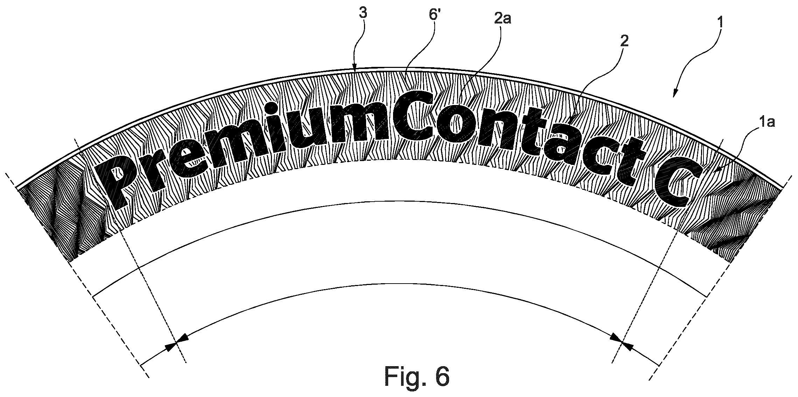

Fig. 1 und Fig. 6 zeigen in die Ebene projizierte Darstellungen von Umfangsabschnitten einer Seitenwand 1 eines Fahrzeugreifens mit einem aus Schriftzeichen 2a bestehenden Schriftzug 2, welcher in einen, insbesondere als Kreisringabschnitt gestalteten Seitenwandabschnitt 1a mit einem Hintergrunddesign 3 eingebettet ist. Das Hintergrunddesign 3 umgibt den Schriftzug 2 und seine Schriftzeichen 2a vollständig und überragt diese an allen Seiten jeweils um mindestens 2,00 mm. Der Seitenwandabschnitt 1a kann Bestandteil eines die Seitenwand 1 kreisringförmig umlaufenden Gesamtdesigns sein, wobei insbesondere an mehreren Stellen des Umfanges ein Seitenwandabschnitt 1a mit einem Schriftzug 2 ausgebildet ist. Die in radialer Richtung ermittelte Breite des Kreisringes oder Kreisringabschnittes beträgt je nach Reifendimension in der Größenordnung von 1,00 cm bis 50,00 cm. Radial innerhalb des Kreisringes oder Kreisringabschnittes befinden sich üblicherweise und insbesondere weitgehend glatte Seitenwandbereiche, welche vorzugsweise mit den Reifen kennzeichnenden Daten versehen sind.

Bei den gezeigten Ausführungsbeispielen bilden die Schriftzeichen 2a den Schriftzug PremiumContact C. Anstelle von Schriftzeichen 2a können andere Zeichen, wie Ziffern, Ziffernfolgen, bildliche Darstellungen und dergleichen, auf der Seitenwand 2 wiedergegeben sein. In der nachfolgenden Beschreibung wird jedoch in Übereinstimmung mit den Darstellungen Bezug auf Schriftzeichen genommen.

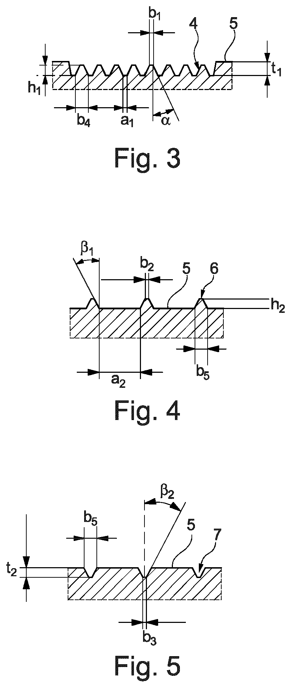

Über den Seitenwandabschnitt 1a, in welchem der Schriftzug 2 ausgebildet bzw. in welchen der Schriftzug 2 eingebettet ist, besteht das Hintergrunddesign 3 aus einer mit einer glatten Oberfläche versehenen Basisfläche 5 (Fig. 2, Fig. 4), in welcher schraffurartig Erhebungen 6 (Fig. 4) oder Vertiefungen 7 (Fig. 5), wie weiter unten noch beschrieben wird, ausgebildet sind. Die Basisfläche 5 bildet, abgesehen von der leichten Wölbung der Seitenwand 2, ein konstantes, "quasiebenes" Basisniveau. Gegenüber der Basisfläche 5 ist der Schriftzug 2 vertieft, das heißt, die Schriftzeichen 2a sind als konstant tiefe Vertiefungen in der Basisfläche 5 ausgebildet (Fig. 3) und von ihrem Boden ausgehend mit einer Schraffur aus einer Vielzahl von eng beabstandeten bzw. unmittelbar aneinander anschließenden Rippen 4 (Fig. 3)versehen, welche, wie insbesondere Fig. 2 zeigt, geradlinig und parallel zueinander verlaufen. Bei alternativen Ausführungen verlaufen die Rippen 4 in Draufsicht bogenförmig oder in sonstiger Weise gekrümmt. Der Boden der Vertiefungen befindet sich dabei gegenüber der Basisfläche 5 in einer Tiefe t₁ (Fig. 3) von 0,20 mm bis 1,00 mm, insbesondere von 0,40 mm. Die Rippen 4 weisen einen vorzugsweise dreieckigen Querschnitt mit Spitzenbereichen mit einer Breite b₁ von 0,10 mm bis 0,25 mm, mit seitlichen Flanken, die unter einem Winkel α von 20° bis 45° zu einer Senkrechten auf die Basisfläche 5 verlaufen und mit einer Höhe h₁ auf, die insbesondere um 0,10 mm bis 0,20 mm geringer ist als die Tiefe t₁. Die Rippen 4 enden daher unterhalb des Basisflächenniveaus. An ihrer Basis weisen die Rippen 4 keinen oder einen insbesondere konstanten und für alle Rippen 4 gleich großen gegenseitigen Abstand a₁ von 0,10 mm bis 0,60 mm, insbesondere von bis zu 0,30 mm, auf. Der gegenseitige Abstand der Mitten der Spitzen benachbarter Rippen 4 beträgt bei einer Ausführung mit einem Abstand a₁ von 0,10 mm und Flankenwinkeln von 25° beispielsweise in der Größenordnung von 0,50 mm. An ihrer Basis weisen die Rippen 4 eine Breite b₄ von 0,30 mm bis 0,60 mm auf. Die Rippen 4 verlaufen bei der gezeigten Ausführung unter einem Winkel von 30° bis 50° relativ zur Umfangsrichtung der Seitenwand 2 (siehe Fig. 2).

Das Hintergrunddesign 3, in welches der Schriftzug 2 eingebettet ist, weist bei der in Fig. 1 gezeigten Ausführung und wie in Fig. 4 dargestellt eine Vielzahl von auf der Basisfläche 5 ausgebildete Erhebungen 6 auf. Bei der gezeigten Ausführung erstrecken sich die Erhebungen 6 in radialer Richtung und infolge der Kreisringform der Seitenwand 1 parallel bzw. nahezu parallel zueinander und bei der gezeigten Ausführung in Draufsicht in einer flachen Zickzackform (Fig. 2) mit vier geradlinigen Abschnitten. Die Erhebungen 6 können sich auch unter einem beliebigen Winkel zur radialen Richtung erstrecken. Dieser Winkel wird an Geraden, die die beiden Enden der Erhebungen 6 verbinden, ermittelt. Der gegenseitige Abstand a₂ der Erhebungen 6 an ihrer Basis beträgt vorzugsweise 1,00 mm bis 4,00 mm, sie sind im Querschnitt insbesondere dreieckförmig mit Flankenflächen, deren Neigungswinkel β₁ relativ zu einer Senkrechten auf die Basisfläche 5 20° bis 45° beträgt. Die Spitzenbereiche der Erhebungen 6 besitzen eine Breite b₂ in der Größenordnung von insbesondere 0,10 mm bis 0,25 mm und befinden sich gegenüber der Basisfläche 5 in einer Höhe h₂ von 0,15 mm bis 0,50 mm, insbesondere von bis 0,30 mm.

Fig. 5 zeigt eine alternative Ausführung, anstelle von Erhebungen 6 sind Vertiefungen 7 in der Basisfläche 5 ausgebildet. Die Vertiefungen 7 sind im Querschnitt V-förmig und weisen daher zwei zum Vertiefungsgrund verlaufende Seitenflanken auf, welche unter einem Winkel β₂ von 20° bis 45° relativ zu einer Senkrechten auf die Basisfläche 5 verlaufen. Der Vertiefungsgrund besitzt eine Breite b₃ von insbesondere 0,10 mm bis 0,25 mm. Die Tiefe t₂ der Vertiefungen 7 beträgt 0,15 mm bis 0,50 mm, insbesondere bis 0,30 mm.

Die Erhebungen 6 weisen an ihrer Basis eine Breite b (Fig. 4) von insbesondere 0,30 mm bis 0,60 mm auf, die Vertiefungen 7 besitzen die Breite b₅ (Fig. 5) am Basisflächenniveau.

Fig. 6 zeigt eine Ausführung des Hintergrunddesigns 3 mit Erhebungen 6', die analog zu den Erhebungen 6 ausgestaltet sind, sich jedoch zum Teil zick-zack-förmig und zum Teil geradlinig oder nahezu geradlinig durchgehend in radialer Richtung über das Hintergrunddesign 3 erstrecken. Bei benachbarten Erhebungen 6' erfolgt durch Abnahme der Winkelung der Abschnitte des Zickzack-Verlaufs ein Übergang zu mehr geradlinig oder zu geradlinig verlaufenden Erhebungen 6' und anschließend wieder ein Übergehen in zick-zack-förmig verlaufende Erhebungen 6' mit einer fortschreitenden Zunahme der Winkelung der Abschnitte des Zickzacks. Dadurch entsteht ein Schraffurmuster, welches durch eine Variation von enger beabstandeten Erhebungen 6' und weiter beabstandeten Erhebungen 6' geprägt ist, wodurch heller erscheinende Musterelemente mit dunkler erscheinenden Musterelementen ein sich wiederholendes Muster bildend abwechseln. Anstelle von Erhebungen 6' können auch, wie bereits beschrieben, Vertiefungen vorgesehen sein.

Sowohl mit Erhebungen 6, 6' als auch mit Vertiefungen 7 wird dem Hintergrunddesign 3 ein aufgelockertes schraffurartiges Muster verliehen, wobei die Basisfläche 5 das Zwei- bis Zehnfache der von den Erhebungen 6, 6' bzw. Vertiefungen 7 an der Gesamtfläche des Seitenwandabschnittes 1a eingenommenen Fläche einnimmt und wobei mindestens 50 % der Erhebungen 6, 6' bzw. Vertiefungen 7 unter gegenseitigen Abständen a₂ verlaufen, die das Zweibis Fünffache des gegenseitigen Abstandes a₁ der Rippen 4 beträgt.

Bei den Ausführungen gemäß Fig. 1 und Fig. 6 sind Erhebungen 6, 6' bzw. Vertiefungen 7 in ihrem Verlauf durch die Schriftzeichen 2a unterbrochen. Bevorzugt enden dabei, wie in Fig. 2 ersichtlich, die Erhebungen 6, 6' bzw. die Vertiefungen 7 in einem geringen Abstand a₃ (Normalabstand zur Außenkontur des Schriftzeichens 2a) von 0,10 mm bis 0,30 mm vor den Schriftzeichen 2a der Schriftzüge 2.

Bei einer Ausführung eines Gesamtdesigns als umlaufender Kreisring kann innerhalb des Kreisringes und an Stellen außerhalb des Hintergrunddesigns 3 bei den von Schriftzügen 2 freien Seitenwandabschnitten zumindest ein weiteres Muster vorliegen, welches durch ein kontinuierliches Ändern bzw. Variieren der Zickzack-Form der Erhebungen 6, 6' oder der Vertiefungen 7 sowie der gegenseitigen Abstände des Hintergrunddesigns 3 gebildet ist, sodass die einzelnen Muster ineinander übergehen.

Wie Fig. 6 in einem kurzen Abschnitt zeigt, kann dabei durch eine Variation der Winkelung der Zickzack-Abschnitte von Erhebungen/Vertiefungen sowie einer Variation des gegenseitigen Abstandes der Erhebungen/Vertiefungen ein Muster aus dunkler und heller erscheinenden Musterelementen gebildet sein. Auf diese Weise kann, über den gesamten Reifenumfang betrachtet, ein Gesamtdesign geschaffen werden, bei welchem bei Sicht auf die Seitenwand dunkler und heller erscheinende Umfangsabschnitte abwechseln, wobei in letzteren Schriftzüge 2, die tief schwarz erscheinen, ausgebildet sind.

### Bezugszeichenliste

- 1: Seitenwand
- 1a: Seitenwandabschnitt
- 2: Schriftzug
- 2a: Schriftzeichen
- 3: Hintergrunddesign
- 4: Rippe
- 5: Basisfläche
- 6, 6': Erhebung
- 7: Vertiefung
- α, β₁, β₂: Winkel
- a₁, a₂, a₃: Abstand
- b₁, b₂, b₃, b₄, b₅: Breite
- h₁, h₂: Höhe
- t₁, t₂: Tiefe

## Patentansprüche

1. Fahrzeugreifen mit zwei Seitenwänden (1), wobei auf zumindest einer Seitenwand (1) zumindest ein Zeichen (2), beispielsweise ein Schriftzeichen, eine Ziffer oder ein bildlich gestaltetes Element, aus einer Schraffur aus einer Vielzahl von parallel zueinander verlaufenden Rippen (4) ausgebildet ist, welche unter gegenseitigen Abständen (a₁) von höchstens 0,60 mm zueinander verlaufen, wobei das/die Zeichen (2) in einen Seitenwandabschnitt (1a) mit einem Hintergrunddesign (3) eingebettet ist/sind, welches aus einer glatten Basisfläche (5) und unter gegenseitigen Abständen (a₂) sowie kreuzungsfrei verlaufenden Erhebungen (6, 6') und/oder Vertiefungen (7) besteht, die ein schraffurartig gestaltetes Muster bilden,
**dadurch gekenzeichnet,**
dass im Hintergrunddesign (3) die Basisfläche (5) das Zwei- bis Zehnfache der von den Erhebungen (6, 6') und/oder Vertiefungen (7) bedeckten Fläche einnimmt, wobei mindestens 50 % der Erhebungen (6, 6') und/oder Vertiefungen (7) unter gegenseitigen Abständen (a₂) verlaufen, die das Zwei- bis Fünffache des gegenseitigen Abstandes (a₁) der Rippen (4) betragen.

2. Fahrzeugreifen nach Anspruch 1, **dadurch gekennzeichnet, dass** die Basisfläche im Hintergrunddesign (3) bis zum Fünffachen der von den Erhebungen (6, 6') und/oder Vertiefungen (7) bedeckten Fläche einnimmt.

3. Fahrzeugreifen nach Anspruch 1 oder 2, **dadurch gekennzeichnet, dass** im Hintergrunddesign (3) sämtliche Erhebungen (6, 6') und/oder Vertiefungen (7) unter gegenseitigen Abständen (a₂) verlaufen, die das Zwei- bis Fünffache des gegenseitigen Abstandes (a₁) der Rippen (4) beträgt.

4. Fahrzeugreifen nach einem der Ansprüche 1 bis 3, **dadurch gekennzeichnet, dass** im Hintergrunddesign (3) sämtliche Erhebungen (6, 6') und/oder Vertiefungen (7) unter gleich großen oder weitgehend gleich großen gegenseitigen Abständen (a₂) verlaufen.

5. Fahrzeugreifen nach einem der Ansprüche 1 bis 4, **dadurch gekennzeichnet, dass** sich die Erhebungen (6, 6') und/oder Vertiefungen (7) im Hintergrunddesign (3) in radialer Richtung oder unter einem Winkel von bis zu 45° zur radialen Richtung erstrecken.

6. Fahrzeugreifen nach einem der Ansprüche 1 bis 5, **dadurch gekennzeichnet, dass** die Erhebungen (6, 6') und/oder Vertiefungen (7) im Hintergrunddesign (3) geradlinig, insgesamt bogenförmig, wellenförmig oder zick-zack-förmig verlaufen.

7. Fahrzeugreifen nach einem der Ansprüche 1 bis 6, **dadurch gekennzeichnet, dass** die Erhebungen (6') und/oder Vertiefungen im Hintergrunddesign (3) zum Teil zick-zack- oder wellenförmig und zum Teil geradlinig oder weitgehend geradlinig verlaufen, wobei bei einander benachbarten Erhebungen (6') und/oder Vertiefungen durch eine fortschreitende Abnahme der Winkelung der Abschnitte des Zick-Zack-Verlaufs oder der Wellenform ein Übergang zu mehr geradlinig oder zu geradlinig verlaufenden Erhebungen (6') und/oder Vertiefungen erfolgt, wobei anschließend wieder zick-zack- oder wellenförmig verlaufende Erhebungen und/oder Vertiefungen mit zunehmender Winkelung der Abschnitte des Zick-Zack-Verlaufs oder der Wellenform folgen.

8. Fahrzeugreifen nach einem der Ansprüche 1 bis 7, **dadurch gekennzeichnet, dass** auf den mit dem Hintergrunddesign (3) versehenem Seitenwandabschnitt (1a) weitere, von Zeichen (2) freie Seitenwandabschnitte mit Mustern aus zick-zack- oder wellenförmig verlaufenden Erhebungen und/oder Vertiefungen folgen, in welchen durch eine Variation der Winkelung von Abschnitten von zick-zack- oder wellenförmig verlaufenden Erhebungen und/oder Vertiefungen und/oder durch eine Variation des gegenseitigen Abstandes von Erhebungen und/oder Vertiefungen ein Muster aus dunkler und heller erscheinenden Musterelementen gebildet ist.

9. Fahrzeugreifen nach einem der Ansprüche 1 bis 8, **dadurch gekennzeichnet, dass** die Erhebungen (6, 6') im Querschnitt vorzugsweise dreieckförmig gestaltet sind, gegenüber der Basisfläche (5) eine größte Höhe (h₂) von 0,15 mm bis 0,50 mm, insbesondere von bis zu 0,30 mm, und an ihrer Basis eine Breite (bs) von 0,30 mm bis 0,60 mm aufweisen.

10. Fahrzeugreifen nach einem der Ansprüche 1 bis 8, **dadurch gekennzeichnet, dass** die Vertiefungen (7) im Querschnitt bevorzugt V-förmig gestaltet sind und eine größte Tiefe (t₂) von 0,15 mm bis 0,50 mm, insbesondere von bis zu 0,30 mm, und am Basisflächenniveau eine Breite (bs) von 0,30 mm bis 0,60 mm aufweisen.

11. Fahrzeugreifen nach einem der Ansprüche 1 bis 10, **dadurch gekennzeichnet, dass** jedes im Hintergrunddesign (3) eingebettete Zeichen (2) eine vorzugsweise 0,20 mm bis 1,00 mm tiefe Vertiefung in der Basisfläche (5) ist, auf deren Boden die Rippen (4) ausgebildet sind.

12. Fahrzeugreifen nach Anspruch 11, **dadurch gekennzeichnet, dass** die Rippen (4) vorzugsweise geradlinig oder insgesamt bogenförmig verlaufen und eine Höhe (h₁) aufweisen, die um insbesondere 0,10 mm bis 0,20 mm geringer ist als die Tiefe (t₁) der Vertiefung.

13. Fahrzeugreifen nach einem der Ansprüche 1, 11 oder 12, **dadurch gekennzeichnet, dass** die Rippen (4) an ihrer Basis eine Breite (b₄) von 0,30 mm bis 0,60 mm aufweisen.

14. Fahrzeugreifen nach einem der Ansprüche 1 oder 11 bis 13, **dadurch gekennzeichnet, dass** sich die Rippen (4) unter einem Winkel von 30° bis 50° relativ zur Umfangsrichtung der Seitenwand (1) erstrecken.

## Claims

1. Vehicle tire having two sidewalls (1), wherein, on at least one sidewall (1), at least one character (2), for example a text character, a numeral or a pictorial element, is formed from a hatching composed of a multiplicity of ribs (4) which run parallel to one another and which run with spacings (a₁) to one another of at most 0.60 mm, wherein the character(s) (2) is/are embedded into a sidewall portion (1a) having a background design (3) which is composed of a smooth base surface (5) and of elevations (6, 6') and/or depressions (7) which run with spacings (a₂) to one another and without intersecting and which form a hatching-like pattern,
**characterized**
**in that**, in the background design (3), the base surface (5) occupies two to ten times the area covered by the elevations (6, 6') and/or depressions (7), wherein at least 50% of the elevations (6, 6') and/or depressions (7) run with spacings (a₂) to one another that amount to two to five times the spacing (a₁) of the ribs (4) to one another.

2. Vehicle tire according to Claim 1, **characterized in that**, in the background design (3), the base surface occupies up to five times the area covered by the elevations (6, 6') and/or depressions (7).

3. Vehicle tire according to Claim 1 or 2, **characterized in that**, in the background design (3), all of the elevations (6, 6') and/or depressions (7) run with spacings (a₂) to one another that amount to two to five times the spacing (a₁) of the ribs (4) to one another.

4. Vehicle tire according to any one of Claims 1 to 3, **characterized in that**, in the background design (3), all of the elevations (6, 6') and/or depressions (7) run with equal or substantially equal spacings (a₂) to one another.

5. Vehicle tire according to any one of Claims 1 to 4, **characterized in that**, in the background design (3), the elevations (6, 6') and/or depressions (7) extend in a radial direction or at an angle of up to 45° with respect to the radial direction.

6. Vehicle tire according to any one of Claims 1 to 5, **characterized in that**, in the background design (3), the elevations (6, 6') and/or depressions (7) run rectilinearly or in an altogether arcuate, undulating or zigzag shape.

7. Vehicle tire according to any one of Claims 1 to 6, **characterized in that**, in the background design (3), the elevations (6') and/or depressions run partially in a zigzag or undulating shape and partially rectilinearly or substantially rectilinearly, wherein, in the case of mutually adjacent elevations (6') and/or depressions, a progressive decrease of the angles in the portions of the zigzag profile or undulating shape gives rise to a transition to more rectilinearly running, or to rectilinearly running, elevations (6') and/or depressions, wherein these are then followed again by elevations and/or depressions running in a zigzag or undulating shape with increasing angles in the portions of the zigzag profile or undulating shape.

8. Vehicle tire according to any one of Claims 1 to 7, **characterized in that** the sidewall portion (1a) provided with the background design (3) is followed by further sidewall portions which are free from characters (2), which have patterns consisting of elevations and/or depressions running in a zigzag or undulating shape, and in which a variation of the angles of portions of elevations and/or depressions running in a zigzag or undulating shape, and/or a variation of the spacing of elevations and/or depressions to one another, gives rise to a pattern consisting of pattern elements that appear darker and lighter.

9. Vehicle tire according to any one of Claims 1 to 8, **characterized in that** the elevations (6, 6') are preferably triangular in cross section, have a greatest height (h₂) in relation to the base surface (5) of 0.15 mm to 0.50 mm, in particular of up to 0.30 mm, and at their base have a width (bs) of 0.30 mm to 0.60 mm.

10. Vehicle tire according to any one of Claims 1 to 8, **characterized in that** the depressions (7) are preferably V-shaped in cross section, have a greatest depth (t₂) of 0.15 mm to 0.50 mm, in particular of up to 0.30 mm, and at the level of the base surface have a width (bs) of 0.30 mm to 0.60 mm.

11. Vehicle tire according to any one of Claims 1 to 10, **characterized in that** each character (2) that is embedded in the background design (3) is a depression, with a depth of preferably 0.20 mm to 1.00 mm, in the base surface (5), on the bottom of which depression the ribs (4) are formed.

12. Vehicle tire according to Claim 11, **characterized in that** the ribs (4) run preferably rectilinearly or in an altogether arcuate shape and have a height (h₁) that is smaller by in particular 0.10 mm to 0.20 mm than the depth (t₁) of the depression.

13. Vehicle tire according to any one of Claims 1, 11 and 12, **characterized in that** the ribs (4) have at their base a width (b₄) of 0.30 mm to 0.60 mm.

14. Vehicle tire according to any one of Claims 1 and 11 to 13, **characterized in that** the ribs (4) extend at an angle of 30° to 50° relative to the circumferential direction of the sidewall (1).

## Revendications

1. Pneu de véhicule, pourvu de deux flancs (1), dans lequel sur au moins un flanc (1), au moins un symbole (2), par exemple une lettre, un chiffre ou un élément graphique, est réalisé par une hachure composée d'une pluralité de nervures (4) s'étendant en parallèle les unes aux autres et qui s'étendent avec des distances mutuelles (a₁) d'un maximum de 0,60 mm les unes par rapport aux autres, dans lequel le(s) symbole(s) (2) est/sont incorporé(s) dans une section de flanc (1a) ayant un design d'arrière-plan (3) composé d'une surface de base lisse (5) et de reliefs (6, 6') s'étendant à des distances mutuelles (a2) et sans se croiser, et/ou de creux (7) qui constituent un motif de type hachure,
**caractérisé**
**en ce que** dans le design d'arrière-plan (3), la surface de base (5) occupe deux à dix fois la surface recouverte par les reliefs (6, 6') et/ou les creux (7), dans lequel au moins 50 % des reliefs (6, 6') et/ou des creux (7) s'étendent à des distances mutuelles (a₂) qui sont deux à cinq fois la distance mutuelle (a₁) des nervures (4).

2. Pneu de véhicule selon la revendication 1, **caractérisé en ce que** la surface de base dans le design d'arrière-plan (3) occupe jusqu'à cinq fois la surface recouverte par les reliefs (6, 6') et/ou les creux (7).

3. Pneu de véhicule selon la revendication 1 ou 2, **caractérisé en ce que** dans le design d'arrière-plan (3), tous les reliefs (6, 6') et/ou creux (7) s'étendent à des distances mutuelles (a₂) qui sont deux ou cinq fois les distances mutuelles (a₁) des nervures (4).

4. Pneu de véhicule selon l'une quelconque des revendications 1 à 3, **caractérisé en ce que** dans le design d'arrière-plan (3), tous les reliefs (6, 6') et/ou creux (7) s'étendent à des distances (a₂) mutuelles identiques ou substantiellement identique.

5. Pneu de véhicule selon l'une quelconque des revendications 1 à 4, **caractérisé en ce que** les reliefs (6, 6') et/ou les creux (7) dans le design d'arrière-plan (3) s'étendent dans la direction radiale ou selon un angle jusqu'à 45° par rapport à la direction radiale.

6. Pneu de véhicule selon l'une quelconque des revendications 1 à 5, **caractérisé en ce que** les reliefs (6, 6') et/ou les creux (7) dans le design d'arrière-plan (3) s'étendent en ligne droite, globalement en forme d'arc, de manière ondulée ou en zigzag.

7. Pneu de véhicule selon l'une quelconque des revendications 1 à 6, **caractérisé en ce que** les reliefs (6') et/ou les creux dans le design d'arrière-plan (3) s'étendent en partie en zigzag ou de manière ondulée et en partie en ligne droite ou de manière substantiellement droite, dans lequel, pour des reliefs (6') et/ou creux voisins les uns des autres, une diminution progressive du coudage des sections du tracé en zigzag ou de forme ondulée opère un passage à des reliefs (6') et/ou des creux s'étendant de manière plus droite ou droite, dans lequel on retrouve ensuite à nouveau des reliefs et/ou des creux s'étendant en zigzag ou en forme ondulée avec un coudage croissant des sections du tracé en zigzag ou de la forme ondulée.

8. Pneu de véhicule selon l'une quelconque des revendications 1 à 7, **caractérisé en ce que** la section de flanc (1a) munie du design d'arrière-plan (3) est suivie d'autres sections de flanc exemptes de symboles (2) avec des motifs de reliefs et/ou de creux s'étendant en zigzag ou de manière ondulée dans lesquelles un motif d'éléments de motif apparaissant plus sombres et plus clairs est formé par une variation du coudage de sections de reliefs et/ou de creux en forme de zigzag ou ondulée de reliefs et/ou de creux, et/ou par une variation de la distance mutuelle de reliefs et/ou de creux.

9. Pneu de véhicule selon l'une quelconque des revendications 1 à 8, **caractérisé en ce que** les reliefs (6, 6') sont configurés en section transversale de préférence en forme de triangle, présentant par rapport à la surface de base (5) une grande hauteur (h₂) de 0,15 mm à 0,50 mm, en particulier jusqu'à 0,30 mm, et une largeur (bs) à leur base de 0,30 mm à 0,60 mm.

10. Pneu de véhicule selon l'une quelconque des revendications 1 à 8, **caractérisé en ce que** les creux (7) sont configurés en section transversale de préférence en forme de V, et présentent une grande profondeur (t₂) de 0,15 mm à 0,50 mm, en particulier jusqu'à 0,30 mm, et une largeur (bs) à leur base de 0,30 mm à 0,60 mm.

11. Pneu de véhicule selon l'une quelconque des revendications 1 à 10, **caractérisé en ce que** le symbole (2) incorporé dans le design d'arrière-plan (3) est un creux d'une profondeur, de préférence d'une profondeur de 0,20 mm à 1,00 mm dans la surface de base (5) sur le fond de laquelle les nervures (4) sont réalisées.

12. Pneu de véhicule selon la revendication 11, **caractérisé en ce que** les nervures (4) s'étendent de préférence de manière droite ou globalement en forme d'arc et présentent une hauteur (h₁) qui est inférieure en particulier de 0,10 mm à 0,20 mm à la profondeur (t₁) du creux.

13. Pneumatique pour véhicule selon l'une des revendications 1, 11 ou 12, **caractérisé en ce que** les nervures (4) présentent à leur base une largeur (b₄) de 0,30 mm à 0,60 mm..

14. Pneu de véhicule selon l'une quelconque des revendications 1 ou 11 à 13, **caractérisé en ce que** les nervures (4) s'étendent selon un angle de 30° à 50° par rapport à la direction circonférentielle du flanc (1).
